# EUROPÄISCHE PATENTSCHRIFT

(11) **EP 2 946 963 B1**
(45) Veröffentlichungstag und Bekanntmachung des Hinweises auf die Patenterteilung: **22.01.2020**
(21) Anmeldenummer: 15001383.7
(22) Anmeldetag: 07.05.2015
(51) Int. Cl.: B60K 17/16, B60K 6/387, B60K 6/48, B60W 10/02, B60W 10/08, B60W 10/16

(54) **KRAFTFAHRZEUG**
MOTOR VEHICLE
VÉHICULE AUTOMOBILE

(30) Priorität: 24.05.2014 DE 102014007940
(43) Veröffentlichungstag der Anmeldung: 25.11.2015
(73) Patentinhaber: AUDI AG, 85045 Ingolstadt (DE)
(72) Erfinder: Pinschmidt, Udo, DE - 85080 Gaimersheim (DE)

(56) Entgegenhaltungen:
- WO-A1-2014/033137
- DE-A1-102006 031 089
- DE-A1-102009 056 366
- DE-A1-102010 036 240
- US-A1- 2011 269 592

## Beschreibung

Die Erfindung betrifft ein Kraftfahrzeug, umfassend einen Antriebsmotor zum Antrieb des Kraftfahrzeugs, wenigstens einen Zusatzmotor und wenigstens ein Differential zur Verteilung eines durch den Antriebsmotor erzeugten und durch eine Antriebswelle zu einem angetriebenen Differentialelement des Differentials geführten Antriebsmoments auf zwei Abtriebswellen.

Um das Fahrverhalten eines Kraftfahrzeugs zu verbessern ist es bekannt, Fahrzeugsysteme zu nutzen, die ein durch einen Antriebsmotor bereitgestelltes Drehmoment zwischen mehreren Achsen eines Kraftfahrzeugs, insbesondere einer Vorder- und einer Hinterachse, bzw. zwischen den Rädern einer Achse eines Kraftfahrzeugs verteilen. Eine Möglichkeit Drehmomente auf Abtriebswellen zu verteilen, wobei unterschiedliche Drehzahlen der Abtriebswellen möglich sind, ist ein Differential bzw. Differentialgetriebe. In Kraftfahrzeugen werden dabei zahlreiche Varianten von Differentialen genutzt, um beispielsweise bei einem Durchdrehen eines Rades eine Drehmomentumverteilung auf das durchdrehende Rad zu verhindern. Dabei sind rein passive Systeme, wie einfache Sperrdifferentiale, bekannt, es ist jedoch auch bekannt, gezielt eine der Abtriebswellen zu bremsen, um die Drehmomentverteilung zu ändern.

Um die Anpassbarkeit der Verteilung von Drehmomenten zwischen Abtriebswellen zu verbessern, werden auch sogenannte Torque Vectoring Systeme genutzt, die durch eine mechanische Umverteilung eines Teils des Antriebsmoments vom Differential direkt auf die entsprechende Abtriebsachse gezielt Drehmomente zwischen den Abtriebsachsen verteilen können (siehe beispielsweise DE 10 2010 036 240 A). Hierzu sind die Abtriebswellen beispielsweise über eine hydraulische oder elektromechanische Kupplung, beispielsweise mit einem Schrittmotor, oder eine Magnetkupplung an die Antriebswelle koppelbar.

Nachteilig bei derartigen Systemen zur Anpassung der Drehmomentverteilung ist, dass eine relativ aufwendige Mechanik erforderlich ist. Dies erhöht den Preis und das Gewicht des Kraftfahrzeugs.

Es sind zudem Hybridfahrzeuge bekannt, die einen Elektromotor nutzen, um die Fahrleistung eines Verbrennungsmotors zu erhöhen. Hierzu können ein Verbrennungsmotor, ein Elektromotor und eine Abtriebswelle beispielsweise über ein Planetengetriebe gekoppelt werden, womit ein Drehmoment, das durch den Elektromotor bereitgestellt wird zum Drehmoment des Verbrennungsmotors addiert wird, womit der Lastpunkt des Verbrennungsmotors verschoben werden kann. Dies kann zum einen zur Erhöhung der Fahrleistung und zum anderen zur Reduzierung des Kraftstoffverbrauchs des Verbrennungsmotors genutzt werden.

Nachteilig ist dabei jedoch, dass durch den Elektromotor sowie die weiteren Komponenten das Gewicht und der Preis des Kraftfahrzeugs erhöht werden.

Der Erfindung liegt damit die Aufgabe zugrunde, ein demgegenüber verbessertes Kraftfahrzeug anzugeben, das eine kontrollierte Verteilung von Drehmomenten auf verschiedene Räder bzw. Achsen des Kraftfahrzeugs ermöglicht.

Die Aufgabe wird erfindungsgemäß durch ein Kraftfahrzeug gemäß Anspruch 1 gelöst.

Erfindungsgemäß wird vorgeschlagen, einen Zusatzmotor des Kraftfahrzeugs sowohl zur Anpassung der Verteilung eines Antriebsmoments auf verschiedene Abtriebswellen zu nutzen, als auch, in einem zweiten Kupplungszustand der Kupplungseinrichtung, den Zusatzmotor direkt oder indirekt mit dem angetriebenen Differentialelement zu koppeln, um zusätzliches Drehmoment bereitzustellen, das anschließend über das Differential verteilt werden kann, oder um über den Zusatzmotor Energie zu rekuperieren. Im erfindungsgemäßen Kraftfahrzeug kann ein Zusatzmotor je nach Kupplungszustand der Kupplungseinrichtung für unterschiedliche Funktionen genutzt werden. So kann beispielsweise bei einer schnellen Kurvenfahrt die Kupplungseinrichtung durch die Steuereinrichtung in den ersten Kupplungszustand geschaltet werden, in dem durch Steuerung des Zusatzmotors eine gezielte Verteilung des Antriebsmoments des Antriebsmotors auf die Abtriebswellen und damit die Räder möglich ist. Erfolgt jedoch beispielsweise ein Beschleunigen oder ein Bremsen auf im Wesentlichen gerader Strecke, kann die Steuereinrichtung die Kupplungseinrichtung in den zweiten Kupplungszustand schalten, womit der Zusatzmotor zur Unterstützung des Antriebsmotors bzw. zum Rekuperieren von Energie genutzt werden kann.

Die Kupplungseinrichtung kann dabei im ersten Kupplungszustand den Zusatzmotor von dem angetriebenen Differentialelement entkoppeln und im zweiten Kupplungszustand den Zusatzmotor von der Abtriebswelle entkoppeln. Alternativ kann im ersten Kupplungszustand der Zusatzmotor mit dem angetriebenen Differentialelement und mit der Abtriebswelle gekoppelt sein und im zweiten Kupplungszustand von der Abtriebswelle entkoppelt sein.

Die Bestimmung des entsprechenden Kupplungszustandes kann durch die Steuereinrichtung in Abhängigkeit von einer Vielzahl von Kraftfahrzeugparametern und von durch Erfassungseinrichtungen erfassten Umfeldparametern erfolgen. So können beispielsweise die Gaspedalstellung, ein Giermoment des Kraftfahrzeugs, die Raddrehzahlen des Kraftfahrzeugs und Ähnliches erfasst werden und der Kupplungszustand kann in Abhängigkeit dieser Parameter bestimmt werden. Die Steuereinrichtung kann jedoch auch Informationen über eine geplante Route, Informationen von Fahrerassistenzsystemen über zeitlich vorausliegende Fahrsituationen und Ähnliches auswerten. Ergänzend oder alternativ ist es auch möglich, den Kupplungszustand in Abhängigkeit einer über ein Bedienelement erfassten Bedieneingabe eines Benutzers festzulegen. Beispielsweise kann bei Geländefahrten der erste Kupplungszustand durch den Benutzer festgelegt werden, während im Stadtverkehr der zweite Kupplungszustand festgelegt wird.

Im erfindungsgemäßen Kraftfahrzeug können insbesondere mehrere Differentiale mit jeweils zugeordnetem Zusatzmotor genutzt werden. Insbesondere kann für jede angetriebene Achse des Kraftfahrzeugs ein separates Differential mit zugeordnetem Zusatzmotor vorgesehen sein. Ergänzend oder alternativ kann ein weiteres Differential mit zugeordnetem Zusatzmotor zur Verteilung eines Antriebsmoments auf verschiedene Achsen, insbesondere eine Vorder- und eine Hinterachse genutzt werden.

Die Kupplungseinrichtung kann insbesondere zur formschlüssigen Kupplung ausgebildet sein. Dabei kann insbesondere eine Synchronisation der durch die Kupplungseinrichtung zu kuppelnden Elemente vorgesehen sein. Die Kupplungseinrichtung kann jedoch auch eine kraftschlüssige Kupplung, eine hydraulische Kupplung oder Ähnliches nutzen.

Es ist dabei möglich, dass der Antriebsmotor ein Verbrennungsmotor ist. Ergänzend oder alternativ ist es möglich, dass der Zusatzmotor ein Elektromotor ist. Dabei kann ein Elektromotor als Zusatzmotor insbesondere in Kraftfahrzeugen genutzt werden, die eine Bordnetzspannung von größer 30 Volt, insbesondere 48 Volt aufweisen. Alternativ wäre eine Nutzung von Elektromotoren als Zusatzmotoren auch dann möglich, wenn ein Hochspannungsbordnetz mit einer Spannung von größer 100 Volt im Kraftfahrzeug vorhanden ist. Der Zusatzmotor kann insbesondere ein Gleichstrommotor sein, womit ein Betrieb am Bordnetz des Kraftfahrzeugs ohne einen zusätzlichen Spannungswandler möglich ist. Ist der Antriebsmotor ein Verbrennungsmotor und der Zusatzmotor ein Elektromotor, wird im erfindungsgemäßen Kraftfahrzeug damit eine Hybrid-Funktionalität des Kraftfahrzeugs bereitgestellt.

Es ist möglich, dass das Kraftfahrzeug eine Energiespeichereinrichtung mit zugeordneter Ladeeinrichtung umfasst, wobei die Steuereinrichtung dazu ausgebildet ist, in wenigstens einem Betriebsmodus die Kupplungseinrichtung zum Betrieb im zweiten Kupplungszustand anzusteuern und den Zusatzmotor sowie die Ladeeinrichtung zum Laden der Energiespeichereinrichtung durch Rekuperation anzusteuern. Dabei kann der Zusatzmotor als Generator betrieben werden und die Ladeeinrichtung den Motor, insbesondere über einen Spannungswandler, mit der Energiespeichereinrichtung verbinden. Es wird ein Betriebsmodus für das Kraftfahrzeug bereitgestellt, in dem das Kraftfahrzeug Energie rekuperiert.

Im erfindungsgemäßen Kraftfahrzeug kann der Zusatzmotor zudem zur Unterstützung des Antriebsmotors und insbesondere auch als Ersatz für den Antriebsmotor zum Antrieb der Räder genutzt werden. Befindet sich die Kupplungseinrichtung im zweiten Kupplungszustand, stellt das erfindungsgemäße Kraftfahrzeug daher insbesondere die Funktionalität eines Hybridfahrzeugs bereit.

Die Antriebswelle kann durch ein Kegelradgetriebe mit dem angetriebenen Differentialelement verbunden sein, wobei ein Tellerrad des Kegelradgetriebes mit dem angetriebenen Differentialelement, das insbesondere als Gehäuse des Differentials ausgebildet ist, verbunden ist. Eine derartige Anordnung ermöglicht beispielsweise die Kopplung eines Planetengetriebes als Differential an Abtriebswellen, die den Rädern des Kraftfahrzeugs zugeordnet sind und im Wesentlichen in Fahrzeugquerrichtung verlaufen, und zugleich an einen konventionellen Antriebsstrang, der eine Welle in Fahrzeuglängsrichtung aufweist. Das Tellerrad kann mit dem Gehäuse verschraubt, verschweißt oder verpresst sein.

Besonders vorteilhaft ist es jedoch, wenn das Tellerrad über eine durch die Steuereinrichtung gesteuerte weitere Kupplungseinrichtung mit dem angetriebenen Differentialelement verbunden ist, die in einem ersten Kupplungszustand das Tellerrad mit dem angetriebenen Differentialelement koppelt und in einen zweiten Kupplungszustand das Tellerrad von dem angetriebenen Differentialelement trennt. Die weitere Kupplungseinrichtung ermöglicht es, den Antriebsmotor von dem angetriebenen Differentialelement und damit vom Differential zu trennen. Dies ermöglicht insbesondere einen Antrieb der Abtriebswellen ausschließlich durch den Zusatzmotor. Dabei werden Reibungsverluste im weiteren Antriebsstrang und Verluste durch den Antriebsmotor vermieden.

Erfindungsgemäß ist das Differential als Planetengetriebe mit einem Hohlrad, das insbesondere als Gehäuse des Planetengetriebes ausgebildet ist, einem Sonnenrad und wenigstens einem Planetenrad, das durch einen Planetenträger gelagert ist, ausgebildet.

Die Kupplungseinrichtung koppelt in dem ersten Kupplungszustand den Zusatzmotor mit dem Planetenträger. Dabei kann insbesondere die Antriebswelle mit dem Hohlrad, eine erste der Abtriebswellen mit dem wenigstens einen Planetenrad und eine zweite der Abtriebswellen mit dem Sonnenrad gekoppelt sein. Eine Kopplung des Zusatzmotors an die Abtriebswelle über den Planetenträger erlaubt eine mechanisch besonders einfache Kopplung des Zusatzmotors an die Abtriebswelle. Dabei kann insbesondere bei geringem Bauraumverbrauch zugleich eine ausreichende Übersetzung zwischen Zusatzmotor und Abtriebswelle erreicht werden. Vorteilhaft koppelt in dem zweiten Kupplungszustand die Kupplungseinrichtung den Zusatzmotor mit dem Hohlrad. Eine derartige Kopplung ist insbesondere über einen separaten Zahnkranz, ein Tellerrad oder Ähnliches möglich, die am Hohlrad befestigt, also beispielsweise verpresst, verschweißt oder verschraubt, sind. Wird der Zusatzmotor im ersten Kupplungszustand mit dem Planetenträger gekoppelt und im zweiten Kupplungszustand mit dem Hohlrad, kann die Kupplungseinrichtung direkt im Bereich des Planetengetriebes angeordnet werden und besonders kompakt ausgebildet werden, da das Hohlrad und der Planetenträger räumlich direkt benachbart sind. Alternativ kann das Differential als Kegeldifferential oder Kugeldifferential ausgebildet sein. Dabei kann im ersten Kupplungszustand, zur Momentverteilung; der Zusatzmotor über eine Seitenwelle und insbesondere eine Übersetzung mit der Abtriebswelle gekoppelt sein. Der Zusatzmotor kann im ersten Kupplungszustand insbesondere sowohl mit der Abtriebswelle als auch mit dem angetriebenen Differentialelement, insbesondere einem Differentialgehäuse, gekoppelt sein. Alternativ wäre es möglich, den Zusatzmotor im ersten Kupplungszustand von dem angetriebenen Differentialelement zu trennen. Im zweiten Kupplungszustand kann insbesondere die Seitenwelle von der Abtriebswelle entkoppelt werden, womit die Seitenwelle frei läuft. Durch die Kopplung des Zusatzmotors mit dem angetriebenen Differentialelement kann der Zusatzmotor als Generator und/oder zur Unterstützung der Leistung des Antriebsmotors genutzt werden. Wie im Folgenden noch genauer erläutert, kann zudem der Antriebsmotor vom Differential abgekoppelt werden, womit ein ausschließlicher Antrieb des Kraftfahrzeugs durch den Zusatzmotor beziehungsweise ein Rekuperationsbetrieb ohne ein Bremsen des Antriebsmotors möglich ist.

Es ist möglich, dass die Kupplungseinrichtung über ein Getriebe mit einem vorgegebenen Übersetzungsfaktor mit dem angetriebenen Differentialelement gekoppelt ist. Ergänzend oder alternativ ist es möglich, dass die Kupplungseinrichtung über ein Getriebe mit einem vorgegebenen Übersetzungsfaktor mit der Abtriebswelle gekoppelt ist. Über entsprechende Getriebe zur Verbindung mit dem angetriebenen Differentialelement bzw. der Abtriebswelle können Drehzahlen bzw. Drehmomente der Antriebs- bzw. Abtriebswelle dem Drehzahlbereich beziehungsweise dem bereitgestellten Drehmoment des Zusatzmotors angepasst werden.

Die Kupplungseinrichtung kann insbesondere in einem dritten Kupplungszustand den Zusatzmotor sowohl von dem angetriebenen Differentialelement als auch von der Abtriebswelle trennen. In diesem Fall wird der Zusatzmotor von dem gesamten Antriebsstrang entkoppelt. Eine derartige Entkopplung vom Antriebsstrang verhindert zum einen einen Energieverlust durch den Zusatzmotor, wenn dieser weder zur Bereitstellung von Drehmoment noch zur Rekuperation betrieben wird, zum anderen sind aufgrund dieses dritten Kupplungszustandes Schutzfunktionen für den Zusatzmotor und weitere elektronische Komponenten besonders leicht implementierbar. So ist es möglich, dass die Steuereinrichtung ausgebildet ist, bei einem Überschreiten eines vorgegebenen Grenzwertes durch einen erfassten Betriebsparameter des Differentials die Kupplungseinrichtung zum Wechseln in den dritten Kupplungszustand anzusteuern. Der Betriebsparameter kann dabei insbesondere durch einen Sensor des Kraftfahrzeugs erfasst werden, der Betriebsparameter kann jedoch auch ein Parameter des Zusatzmotors ein, insbesondere wenn dies ein Elektromotor ist. Dabei kann der Betriebsparameter insbesondere eine Drehzahldifferenz oder eine Drehmomentdifferenz zwischen den Abtriebswellen oder eine Zeitableitung der Drehmoment- bzw. Drehzahldifferenz sein. Ein derartiges Trennen des Zusatzmotors bei Überschreiten eines vorgegebenen Grenzwertes durch den erfassten Betriebsparameter dient, insbesondere dem Überlastungsschutz von elektrischen Komponenten. Hohe Drehzahl- bzw. Drehmomentdifferenzen zwischen Abtriebswellen bzw. plötzliche zeitliche Änderungen dieser können den Zusatzmotor selbst oder elektrische, dem Zusatzmotor zugeordnete Komponenten, wie beispielsweise Spannungswandler oder Energiespeicher, stark belasten. Dies wird durch das beschriebene Umschalten in den dritten Kupplungszustand verhindert.

Alternativ oder ergänzend kann die Steuereinrichtung ausgebildet sein, ausschließlich bei einem Überschreiten eines weiteren vorgegebenen Grenzwertes durch die Drehzahldifferenz zwischen den Abtriebswellen sowie bei Erfüllung einer vom Betriebszustand des Zusatzmotors abhängigen Verbindungsbedingung die Kupplungseinrichtung zum Betrieb im ersten Kupplungsmodus anzusteuern. Ein gezieltes Verteilen von Drehmomenten ist insbesondere möglich, wenn der Zusatzmotor betrieben wird. Bei einem Betrieb des Zusatzmotors zur Verteilung von Drehmomenten kann die Kupplungseinrichtung also stets zum Betrieb im ersten Kupplungsmodus angesteuert werden. Ist dies nicht der Fall, kann die Kupplungseinrichtung bei Unterschreiten des weiteren vorgegebenen Grenzwerts durch die Drehzahldifferenz in den dritten Kupplungsmodus geschaltet werden. Dadurch wird verhindert, dass minimale Drehzahldifferenzen zwischen den Abtriebswellen, wie sie beispiels- , weise bei einem ungleichmäßig beladenen Fahrzeug stets auftreten, zu einem ständigen Laden und Entladen von Energiespeichereinrichtungen führen. Damit wird zum einen der Zusatzmotor geschont, zum anderen werden weitere elektrische Komponenten, wie Spannungswandler, Batterien und Ähnliches geschont.

Das Kraftfahrzeug kann eine weitere Kupplungseinrichtung aufweisen, die in einem ersten Kupplungszustand den Antriebsmotor mit dem angetriebenen Differentialelement koppelt und in einem zweiten Kupplungszustand den Antriebsmotor von dem angetriebenen Differentialelement trennt. Dabei kann die weitere Kupplungseinrichtung durch die Steuereinrichtung insbesondere dann in den zweiten Kupplungszustand geschaltet werden, wenn die Kupplungseinrichtung im zweiten Kupplungszustand ist. In diesem Fall kann der Zusatzmotor die Abtriebswellen ohne weiteren Einfluss des Antriebsmotors antreiben. Dabei werden Reibungsverluste und weitere Verluste durch den Antriebsmotor und weitere Komponenten des Antriebsstrangs vermieden.

Weitere Vorteile und Einzelheiten der Erfindung ergeben sich aus den folgenden Ausführungsbeispielen sowie den zugehörigen Zeichnungen. Dabei zeigen:
- Fig. 1: schematisch ein Ausführungsbeispiel eines erfindungsgemäßen Kraftfahrzeugs,
- Fig. 2: schematisch eine Detailansicht eines weiteren Ausführungsbeispiels des erfindungsgemäßen Kraftfahrzeugs, wobei die Kupplungseinrichtung im ersten Kupplungszustand ist,
- Fig. 3: schematisch die in Fig. 2 gezeigte Detailansicht, wobei die Kupplungseinrichtung im zweiten Kupplungszustand ist, und
- Fig. 4: schematisch die in Fig. 2 und 3 gezeigte Detailansicht, wobei die Kupplungseinrichtung im dritten Kupplungszustand ist,
- Fig. 5: schematisch eine Detailansicht des in Fig. 2 bis Fig. 4 gezeigten Differentials mit der daran angeordneten weiteren Kupplungseinrichtung, und
- Fig. 6: schematisch eine Detailansicht eines weiteren Ausführungsbeispiels des erfindungsgemäßen Kraftfahrzeugs.

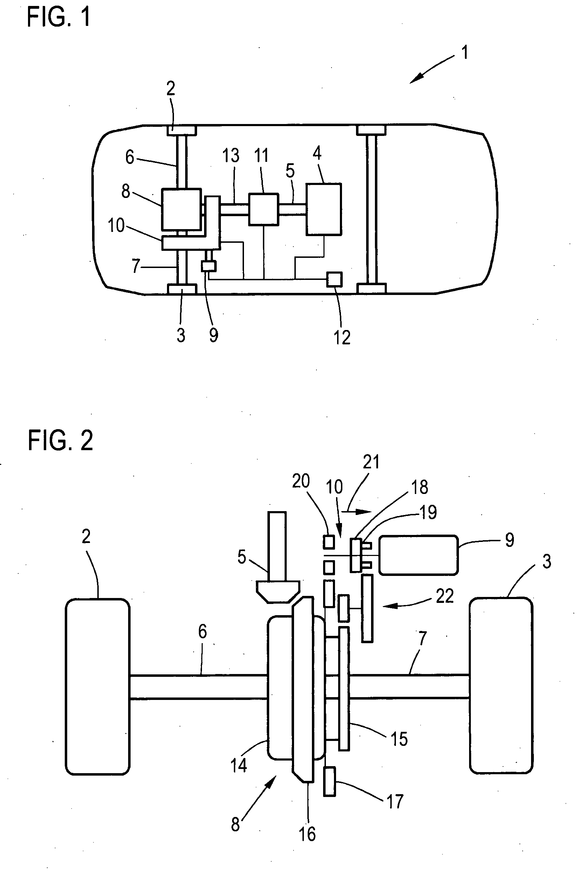

Fig. 1 zeigt schematisch ein Kraftfahrzeug 1 mit einem linken und rechten Hinterrad 2, 3, die im normalen Fahrbetrieb durch den Antriebsmotor 4, der ein Verbrennungsmotor ist, angetrieben werden. Die Verteilung des durch den Antriebsmotor 4 über die Antriebswelle 5 bereitgestellten Antriebsmoments auf die Hinterräder 2, 3 bzw. auf die die Hinterräder antreibenden Abtriebswellen 6, 7 erfolgt über das Differential 8, das als ein Planetengetriebe ausgebildet ist.

Ergänzend ist in dem Kraftfahrzeug 1 der Zusatzmotor 9 vorgesehen, der ein Elektromotor ist. Durch den Zusatzmotor 9 können in Abhängigkeit des Kupplungszustands der Kupplungseinrichtung 10 und des Kupplungszustandes der weiteren Kupplungseinrichtung 11, die beide durch die Steuereinrichtung 12 über einen Fahrzeugbus vorgebbar sind, verschiedene Funktionen bereitgestellt werden. In einem ersten Betriebsmodus des Kraftfahrzeugs ist die Antriebswelle 5 über die weitere Kupplungseinrichtung 11 mit der Verbindungswelle 13 gekoppelt, die wiederum mit einem angetriebenen Differentialelement des Differentials 8 gekoppelt ist. Die Antriebswelle 5 ist daher mit dem angetriebenen Differentialelement gekoppelt und ein durch den Antriebsmotor 4 bereitgestelltes Antriebsmoment wird durch das Differential 8 auf die Abtriebswellen 6, 7 verteilt.

Der Zusatzmotor 9 ist durch die Kupplungseinrichtung 10 sowohl von der Abtriebswelle 7 als auch von der Verbindungswelle 13 und damit von dem angetriebenen Differentialelement getrennt. In diesem Betriebsmodus des Kraftfahrzeugs ist der Zusatzmotor 9 funktionslos und es erfolgt weder ein Torque Vectoring, also eine gezielte Verteilung von Drehmomenten des Antriebsmotors 4 auf die Abtriebswellen 6, 7 noch eine Rekuperation oder eine Unterstützung des Antriebsmotors 4 den Zusatzmotor 9.

Soll, beispielsweise im schwierigen Gelände oder zur Stabilisierung des Kraftfahrzeugs, eine gezielte Verteilung von Drehmomenten durch das Differential 8 erfolgen, so steuert die Steuereinrichtung 12 die Kupplungseinrichtung 10 an, um den Zusatzmotor 9 mit der Abtriebswelle 7 zu koppeln. Dabei soll in der folgenden Diskussion angenommen werden, dass alle Übersetzungen einen Übersetzungsfaktor von 1 aufweisen. Wie im Folgenden noch detailliert erläutert ist dies für ein reales Kraftfahrzeug typischerweise nicht zutreffend. Eine entsprechende Festsetzung vereinfacht aber die Darstellung des Funktionsprinzips.

Beispielhaft soll angenommen werden, dass über die Antriebswelle 5 ein Drehmoment von 1000 Nm bereitgestellt wird. Solange der Zusatzmotor 9 frei läuft, wird dementsprechend sowohl auf die Abtriebswelle 6 als auch auf die Abtriebswelle 7 ein Drehmoment von 500 Nm übertragen. Wird nun über den Zusatzmotor 9 ein Drehmoment von 100 Nm erzeugt und durch die Kupplungseinrichtung 10 additiv auf die Abtriebswelle 7 übertragen, so ist das gesamte auf die Abtriebswelle 7 übertragene Drehmoment 600 Nm. Aufgrund der Funktion des Differentials 8 gilt jedoch, dass die Summe der Drehmomente an den Abtriebswellen 6, 7 gleich dem durch die Antriebswelle 5 bereitgestellten Drehmoment von 1000 Nm ist. Daher werden an die Abtriebswelle 6 nun nur 400 Nm übertragen. In dem beschriebenen ersten Kupplungszustand der Kupplungseinrichtung 10 wird durch das Drehmoment und die Drehrichtung des Zusatzmotors 9 also bestimmt, wie das durch die Antriebswelle 5 zum Differential 8 übertragene Drehmoment zwischen den Abtriebswellen 6, 7 aufgeteilt wird.

Die Steuereinrichtung 12 überwacht währenddessen mehrere Betriebsparameter des Differentials durch nicht gezeigte Sensoren. Bei Erfüllung einer Schutzbedingung steuert die Steuereinrichtung 12 die Kupplungseinrichtung 10 zum Wechseln in einen dritten Kupplungszustand an, der den Zusatzmotor 9 sowohl von der Abtriebswelle 7 als auch von der Antriebswelle 5 trennt. Die Schutzbedingung ist zum einen erfüllt, wenn der Zusatzmotor 9 nicht zur Erzeugung eines Drehmoments angesteuert wird und gleichzeitig die Drehzahldifferenz zwischen den Abtriebswellen 6, 7 unterhalb eines vorgegebenen Grenzwertes liegt. Durch dieses Vorgehen wird ein ständiges Laden und Entladen einer dem Zusatzmotor 9 zugeordneten Energiespeichereinrichtung vermieden, wodurch der Zusatzmotor 9 und die zugeordnete Elektronik geschont werden. Andererseits ist die Schutzbedingung erfüllt, wenn die Drehzahl des Zusatzmotors 9 einen vorgegebenen Grenzwert übersteigt, was zugleich bedeutet, dass die Drehzahldifferenz zwischen den Abtriebswellen 6 und 7 sehr groß ist. Damit kann eine Beschädigung des Zusatzmotors 9 verhindert werden.

Soll während einer Fahrt des Kraftfahrzeugs 1 Energie rekuperiert werden, um Energiespeicher im Kraftfahrzeug 1 zu laden oder soll der Verbrennungsmotor 4 mit einem Zusatzdrehmoment des Zusatzmotors 9 unterstützt werden, so steuert die Steuereinrichtung 12 die Kupplungseinrichtung 10 an, um sie in einen zweiten Kupplungszustand zu versetzen. Im zweiten Kupplungszustand entkoppelt die Kupplungseinrichtung 10 den Zusatzmotor 9 von der Abtriebswelle 7 und koppelt ihn an die Zusatzwelle 13 und damit an das angetriebene Differentialelement. In diesem Kupplungszustand addiert sich das Drehmoment des Antriebsmotors 4 zu dem Drehmoment des Zusatzmotors 9 bevor das Gesamtdrehmoment durch das Differential 8 auf die Abtriebswellen 6, 7 verteilt wird. Dabei kann der Zusatzmotor durch die Steuereinrichtung 12 derart angesteuert werden, dass er die Verbindungswelle 13 und damit die Antriebswelle 5 bremst, womit Energie rekuperiert wird. Andererseits kann der Zusatzmotor 9 durch die Steuereinrichtung 12 derart angesteuert werden, dass er das über die Antriebswelle 5 bereitgestellte Drehmoment erhöht, womit, beispielsweise bei einem Beschleunigen des Kraftfahrzeugs, ein größeres Drehmoment bereitsteht. Ergänzend ist es in diesem Kupplungszustand der Kupplungseinrichtung 10 auch möglich, dass die weitere Kupplungseinrichtung 11 die Antriebswelle 5 von dem Differential 8 trennt. In diesem Fall kann ein Antrieb des Kraftfahrzeugs 1 ausschließlich durch den Zusatzmotor 9 erfolgen.

Fig. 2 zeigt eine Detailansicht eines weiteren Kraftfahrzeugs, in dem sowohl eine gesteuerte Drehmomentverteilung auf die Hinterräder 2, 3 als auch ein Betrieb eines Zusatzmotors 9 zur Unterstützung eines nicht gezeigten Antriebsmotors beziehungsweise zur Rekuperation möglich ist. Die Kupplung des Zusatzmotors durch die Kupplungseinrichtung 10 erfolgt nicht direkt mit der Antriebswelle 5 bzw. der Abtriebswelle 7, sondern durch eine Kopplung mit verschiedenen Bestandteilen des Differentials 8. Das Differential 8 ist dabei als Planetengetriebe ausgebildet, wobei das Planetengetriebe ein angetriebenes Differentialelement 14, nämlich ein Hohlrad ,umfasst, das als Gehäuse des Planetengetriebes ausgebildet ist, in dem ein nicht gezeigtes Sonnenrad sowie drei nicht gezeigte Planetenräder umlaufen, die durch den Planetenträger 15 gelagert sind. Das Sonnenrad ist dabei mit der Abtriebswelle 6 gekoppelt und die Planetenräder sind mit der Abtriebswelle 7 gekoppelt.

Am Gehäuse des Planetengetriebes ist ein Tellerrad 16 angeordnet, das mit dem angetriebenen Differentialelement 14, also dem Gehäuse, über eine nicht dargestellte weitere Kupplungseinrichtung gekoppelt ist, die eine Entkopplung des Gehäuses von dem Tellerrad ermöglicht, um das Differential von dem nicht gezeigten Antriebsmotor zu trennen. Das Tellerrad 16 bildet einen Teil eines Kegelradgetriebes, über das das Differential 8 mit der Antriebswelle 5 gekoppelt ist.

Um eine Ankopplung des Zusatzmotors 9 an das angetriebene Differentialelement 14 zu ermöglichen ist mit dem angetriebenen Differentialelement 14 zudem ein zusätzlicher Zahnkranz 17 verschraubt. Um andererseits eine Kopplung des Zusatzmotors 9 mit dem Planetenträger 15 und damit mit der Abtriebswelle 7 zu ermöglichen, weist auch der Planetenträger 15 einen Zahnkranz auf.

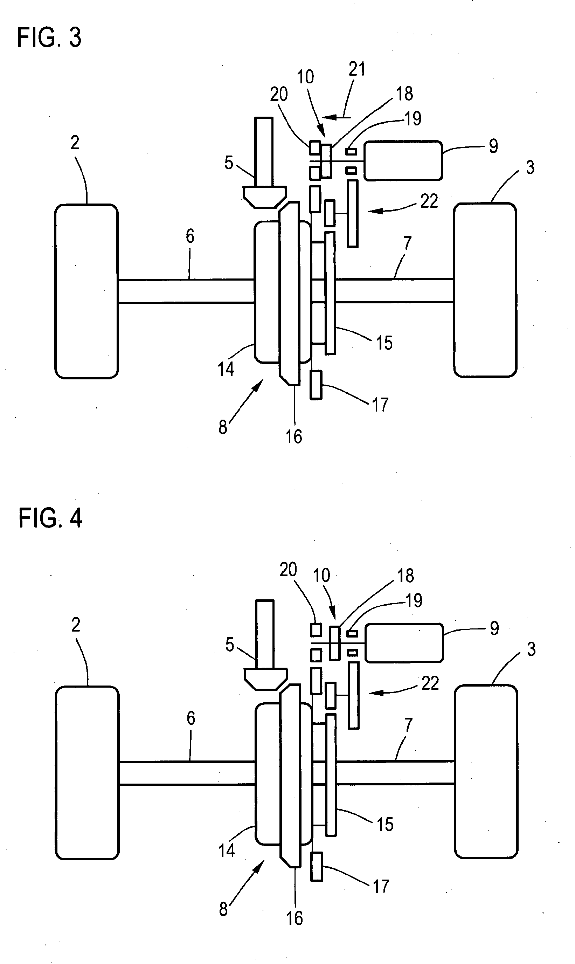

Die Kupplungseinrichtung 10 umfasst eine magnetische Scheibe, die drehfest an einer Achse gelagert ist, die durch den Zusatzmotor 9 rotierbar ist. Die Scheibe 18 ist dabei durch Magnetfelder nicht gezeigter Magneten entlang der Achse verschiebbar. Liegt kein Magnetfeld an, so ist die Scheibe 18 in der in Fig. 4 gezeigten Mittelstellung. In Fig. 2 wird durch die nicht gezeigte Steuereinrichtung der Magnet derart angesteuert, dass die Scheibe wie durch Pfeil 21 angedeutet, in Richtung des Zahnrades 19 geschoben wird, das über ein Getriebe 22 mit dem Planetenträger 15 gekoppelt ist. Im in Fig. 2 gezeigten Kupplungszustand ist der Zusatzmotor 9 also über die Scheibe 18, das Zahnrad 19, die Übersetzung 22 und den Planetenträger 15 mit der Abtriebswelle 7 gekoppelt.

In diesem Kupplungszustand kann, wie bereits zu Fig. 1 erläutert, die Verteilung des Drehmoments, das über die Antriebswelle 5 dem Differential 8 zugeführt wird, auf die Abtriebswellen 6, 7 durch ein Drehmoment des Zusatzmotors beeinflusst werden. Vorteilhaft ist dabei, dass bei einer passenden Wahl von Übersetzungen zwischen dem Zusatzmotor 9 und der Antriebswelle 7 bereits durch relativ schwache Zusatzmotoren 9 ein starker Einfluss auf die Verteilung des Drehmoments genommen werden kann.

Der Zusatzmotor 9 ist ein Elektromotor zum Betrieb an einem 48 Volt Bordnetz des Kraftfahrzeugs, der ein maximales Drehmoment von 14 Nm aufbringen kann. Im Folgenden soll angenommen werden, dass über die Antriebswelle 250 Nm zum Differential 8 geführt werden. Zwischen der Antriebswelle 5 und dem Planetengetriebe 8 ist ein Übersetzungsverhältnis von 1 zu 4 vorgegeben. Daher wird durch das Differential 8 insgesamt ein Drehmoment von 1000 Nm auf die Abtriebswellen 6 und 7 verteilt. Die Übersetzung zwischen dem Zusatzmotor 9 und der Abtriebswelle 7 ist mit Hilfe des Getriebes 22 insgesamt als 1 zu 35 vorgegeben, weshalb durch den Zusatzmotor 9, der 14 Nm leistet, 490 Nm auf die Abtriebswelle 7 übertragen werden können.

Aufgrund der Funktion des Differentials 8 müssen sich die Drehmomente an den Abtriebswellen 6, 7 zu dem durch die Antriebswelle 5 eingebrachten Drehmoment von 1000 Nm addieren. Gleichzeitig muss das Drehmoment an der Abtriebswelle 6 gleich der Summe aus dem Drehmoment an der Abtriebswelle 7 und dem durch den Zusatzmotor 9 eingebrachten Drehmoment sein. Durch diese beiden Bedingungen lässt sich bestimmen, dass mit den erläuterten Parametern auf die Abtriebswelle 6 insgesamt ein Drehmoment von 745 Nm übertragen wird und auf die Abtriebswelle 7 ein Drehmoment von 255 Nm. Es kann also durch einen relativ schwachen Zusatzmotor mit maximal 14 Nm Drehmoment eine sehr starke Verlagerung der Verteilung des Drehmoments durch das Differential 8 vorgegeben werden.

Fig. 3 zeigt einen zweiten Kupplungszustand der Kupplungseinrichtung 10. Die Scheibe 21 ist durch ein Magnetfeld, das zum in Fig. 2 angelegten Magnetfeld entgegengesetzt ist, gegen das Zahnrad 20 gepresst. Über den Zahnkranz 17 wird in diesem Fall das durch den Zusatzmotor 9 bereitgestellte Drehmoment auf das angetriebene Differentialelement 14 übertragen. Durch eine entsprechende Dimensionierung der Getriebeelemente entspricht die Übersetzung dabei 1 zu 20. Wird nun der vorangehend beschriebene Zusatzmotor mit einem maximalen Drehmoment von 14 Nm genutzt, so wird ein Gesamtdrehmoment von 280 Nm für die Abtriebswellen 6, 7 bereitgestellt, womit zu jeder der beiden Abtriebswellen 6, 7 ein Drehmoment von 140 Nm übertragen wird. Aufgrund dieses zusätzlichen Drehmoments kann beispielsweise die Dynamik bei einem Beschleunigungsvorgang des Kraftfahrzeugs deutlich verbessert werden. Ergänzend ermöglicht ein Betrieb der Kupplungseinrichtung im zweiten Kupplungszustand einen ausschließlich elektrischen Fahrbetrieb. Hierzu kann insbesondere durch die weitere Kupplungseinrichtung das Tellerrad 16 von dem angetriebene Differentialelement 14 entkoppelt werden. Damit ist der Antriebsmotor vollständig von dem Differential 8 und damit von den Abtriebswellen 6, 7 entkoppelt.

Soll ein derartiger rein elektrischer Fahrbetrieb häufig genutzt werden, kann vorteilhaft ein etwas stärkerer Zusatzmotor 9 vorgesehen sein, beispielsweise mit einem maximalen Drehmoment von 50 Nm, womit entsprechend der vorangehenden Berechnung ein Drehmoment von bis zu 500 Nm im rein elektrischen Fahrbetrieb für jedes der Räder bereitgestellt werden kann.

Im in Fig. 3 gezeigten zweiten Kupplungszustand der Kupplungseinrichtung 9 ist somit ein Rekuperationsbetrieb möglich, bei dem, insbesondere beim Bremsen des Kraftfahrzeugs Energie zum Laden einer Energiespeichereinrichtung zurückgewonnen wird. Dazu wird der Zusatzmotor 9 durch die Steuereinrichtung derart angesteuert, dass er als Generator dient.

Fig. 4 zeigt die Kupplungseinrichtung 10 in einem dritten Kupplungszustand, in dem kein externes Magnetfeld zum Verschieben der Scheibe 18 anliegt. Durch nicht gezeigte Rückstellelemente wird die Scheibe 18 in diesem Fall in eine Mittelstellung zurückversetzt, in der sie weder mit dem Zahnrad 19 noch mit dem Zahnrad 20 in Kontakt ist. In diesem Zustand ist der Zusatzmotor 9 vollständig von dem Differential 8 und damit von den Abtriebswellen 6, 7 entkoppelt und das Kraftfahrzeug wird ausschließlich durch den Antriebsmotor angetrieben, wobei keine aktive Umverteilung eines Drehmoments auf die Abtriebswellen 6, 7 erfolgt.

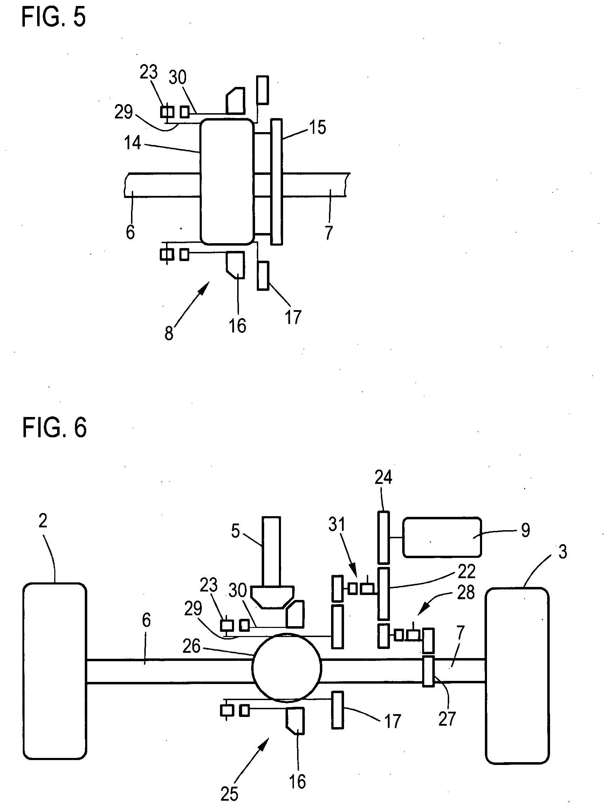

Fig. 5 zeigt eine Detailansicht des in den Figuren 2 - 4 gezeigten Differentials 8, in der die weitere Kupplungseinrichtung 23 dargestellt ist. An das angetriebene Differentialelement 14 des Differentials 8, also an das Gehäuse, ist neben dem Zahnkranz 17 ein Ring 29 fest angebracht. An dem Ring 29 ist die weitere Kupplungseinrichtung 23 vorgesehen, um den Ring 29 mit dem Ring 30 zu koppeln, der fest mit dem Tellerrad 16 verbunden ist. Durch eine Linearverschiebung der weiteren Kupplungseinrichtung 23 kann der Ring 29 mit dem Ring 30 gekoppelt werden, womit das angetriebene Differentialelement 14 mit dem Tellerrad 16 koppelbar ist. Werden die Ringe 29, 30 durch die weitere Kopplungseinrichtung 23 getrennt, so ist auch das Tellerrad 16 von dem angetriebenen Differentialelement 14 getrennt. Somit ist eine vollständige Entkopplung des Differentials 8 von der Antriebswelle 5 möglich.

Fig. 6 zeigt schematisch eine Detailansicht eines dritten Ausführungsbeispiels des erfindungsgemäßen Kraftfahrzeugs, wobei als Differential 25 ein Kegelraddifferential genutzt wird. Das angetriebene Differentialelement 26 ist in diesem Fall das Gehäuse des Differentials 25. Durch die Ringe 29, 30 sowie die weitere Kupplungseinrichtung 23 ist das Gehäuse mit dem Tellerrad 16 eines Kegelradgetriebes verbindbar, womit das angetriebene Differentialelement 26 mit der Antriebswelle 5 koppelbar ist. Wesentlicher Unterschied zu dem mit Bezug auf die Figuren 2 - 5 beschriebenen Aufbau ist die Ankopplung des Zusatzmotors 9 an die Abtriebswelle 7 beziehungsweise das Differential 25. Im ersten Kupplungszustand ist der Zusatzmotor 9 über das Zahnrad 24, das Getriebe 22, ein erstes Kopplungselement 28 der Kupplungseinrichtung und das Zahnrad 27 mit der Abtriebswelle 7 gekoppelt. Im zweiten Kupplungszustand ist der Zusatzmotor 9 über das Zahnrad 24, das Getriebe 22, das im Getriebe 22 integrierte Kupplungselement 31 der Kupplungseinrichtung und den Zahnkranz 17 mit dem angetriebenen Differentialelement 26, also dem Gehäuse des Kegelraddifferentials, verbunden.

Im ersten Kupplungszustand der Kupplungseinrichtung verbindet das Kupplungselement 28 den Zusatzmotor 9 mit der Abtriebswelle 7 und das Kupplungselement 31 trennt den Zusatzmotor 9 von dem angetriebenen Differentialelement 26. Im zweiten Kupplungszustand verbindet das Kupplungselement 31 den Zusatzmotor 9 mit dem angetriebenen Differentialelement 26 und das Kupplungselement 28 trennt den Zusatzmotor 9 von der Abtriebswelle 7.

In einer alternativen Ausführungsform des Kraftfahrzeugs wäre es möglich, das Kupplungselement 31 durch eine feste Verbindung zu ersetzen. In diesem Fall wären im ersten Kupplungszustand sowohl die Abtriebswelle 7 als auch das angetriebene Differentialelement 26 mit dem Zusatzmotor 9 verbunden.

In Abhängigkeit des Kupplungszustandes der Kupplungseinrichtung 10 und der weiteren Kupplungseinrichtung 11, 23 können mit den in den Figuren 1 -6 dargestellten Kraftfahrzeugen eine Vielzahl von Betriebsmodi realisiert werden. Ist über die weitere Kupplungseinrichtung 11, 23 der Antriebsmotor 4 mit dem Differential 8, 25 gekoppelt, so ist bei Betrieb des Kupplungselements 10 im ersten Kupplungszustand ein Torque-Vectoring möglich, bei einem Betrieb der Kupplungseinrichtung im zweiten Kupplungszustand eine Unterstützung des Antriebsmotors 4 durch den Zusatzmotor 9 beziehungsweise eine Nutzung des Zusatzmotors 9 als Triebstrang-Generator, und bei einem Betrieb der Kupplungseinrichtung 10 im dritten Kupplungszustand eine vollständige Entkopplung des Zusatzmotors 9 vom Antriebsstrang.

Trennt die weitere Kupplungseinrichtung 11, 23 den Antriebsmotor 4 vom Differential 8, so ist bei einem Betrieb der Kupplungseinrichtung im ersten Kupplungszustand ein Torque-Vectoring auch bei abgekoppeltem Antriebsmotor 4 möglich. Bei Betrieb der Kupplungseinrichtung im zweiten Kupplungszustand kann ein rein elektrischer Antrieb des Kraftfahrzeugs beziehungsweise ein reiner Rekuperationsbetrieb erfolgen, ohne dass dere Abtriebsstrang des Kraftfahrzeugs mit angetrieben wird.

## Patentansprüche

1. Kraftfahrzeug, umfassend einen Antriebsmotor (4) zum Antrieb des Kraftfahrzeugs (1), wenigstens einen Zusatzmotor (9) und wenigstens ein Differential (8, 25) zur Verteilung eines durch den Antriebsmotor (4) erzeugten und durch eine Antriebswelle (5) zu einem angetriebenen Differentialelement (14, 26) des Differentials (8, 25) geführten Antriebsmoments auf zwei Abtriebswellen (6, 7), wobei das Differential (8) als Planetengetriebe mit einem Hohlrad, das insbesondere als Gehäuse des Planetengetriebes ausgebildet ist, einem Sonnenrad und wenigstens einem Planetenrad, das durch einen Planetenträger (15) gelagert ist, ausgebildet ist, wobei das Kraftfahrzeug (1) eine durch eine Steuereinrichtung (12) steuerbare Kupplungseinrichtung (10) umfasst, die in einem ersten Kupplungszustand den Zusatzmotor (9) direkt oder indirekt mit einer Abtriebswelle (7) koppelt, wodurch die Verteilung des Antriebsmoments auf die Abtriebswellen (6, 7) abhängig von einem durch den Zusatzmotor (9) ausgeübten Zusatzdrehmoment ist, und in einem zweiten Kupplungszustand den Zusatzmotor (9) direkt oder indirekt mit dem angetriebenen Differentialelement (14, 26) koppelt,
**dadurch gekennzeichnet,**
**dass** die Kupplungseinrichtung (10) in dem ersten Kupplungszustand den Zusatzmotor (9) mit dem Planetenträger (15) des Differentials (8) koppelt.

2. Kraftfahrzeug nach Anspruch 1,
**dadurch gekennzeichnet,**
**dass** der Antriebsmotor (4) ein Verbrennungsmotor ist.

3. Kraftfahrzeug nach Anspruch 1 oder 2,
**dadurch gekennzeichnet,**
**dass** der Zusatzmotor (9) ein Elektromotor ist.

4. Kraftfahrzeug nach Anspruch 3,
**dadurch gekennzeichnet,**
**dass** das Kraftfahrzeug (1) eine Energiespeichereinrichtung mit zugeordneter Ladeeinrichtung umfasst, wobei die Steuereinrichtung (12) dazu ausgebildet ist, in wenigstens einem Betriebsmodus die Kupplungseinrichtung (10) zum Betrieb im zweiten Kupplungszustand anzusteuern, und den Zusatzmotor (9) sowie die Ladeeinrichtung zum Laden der Energiespeichereinrichtung durch Rekuperation anzusteuern.

5. Kraftfahrzeug nach einem der vorangehenden Ansprüche,
**dadurch gekennzeichnet,**
**dass** die Antriebswelle (5) durch ein Kegelradgetriebe mit dem angetriebenen Differentialelement (14, 26) verbunden ist, wobei ein Tellerrad (16) des Kegelradgetriebes mit dem angetriebenen Differentialelement (14, 26), das insbesondere als Gehäuse des Differentials (8, 25) ausgebildet ist, verbunden ist.

6. Kraftfahrzeug nach Anspruch 5,
**dadurch gekennzeichnet,**
**dass** das Tellerrad (16) über eine durch die Steuereinrichtung (12) gesteuerte weitere Kupplungseinrichtung (23) mit dem angetriebenen Differentialelement (14, 26) verbunden ist, die in einem ersten Kupplungszustand das Tellerrad (16) mit dem angetriebenen Differentialelement (14, 26) koppelt und in einem zweiten Kupplungszustand das Tellerrad (16) von dem angetriebenen Differentialelement (14, 26) trennt.

7. Kraftfahrzeug nach einem der vorangehenden Ansprüche,
**dadurch gekennzeichnet,**
**dass** in dem zweiten Kupplungszustand die Kupplungseinrichtung (10) den Zusatzmotor (9) mit dem Hohlrad koppelt.

8. Kraftfahrzeug nach einem der vorangehenden Ansprüche, **dadurch gekennzeichnet,**
**dass** die Kupplungseinrichtung (10) über ein Getriebe (22) mit einem vorgegebenen Übersetzungsfaktor mit der Abtriebswelle (7) gekoppelt ist.

9. Kraftfahrzeug nach einem der vorangehenden Ansprüche, **dadurch gekennzeichnet, dass** die Kupplungseinrichtung (10) über ein Getriebe mit einem vorgegebenen Übersetzungsfaktor mit dem angetriebenen Differentialelement (14, 26) gekoppelt ist.

10. Kraftfahrzeug nach einem der vorangehenden Ansprüche,
**dadurch gekennzeichnet,**
**dass** die Kupplungseinrichtung (10) in einem dritten Kupplungszustand den Zusatzmotor (9) sowohl von dem angetriebenen Differentialelement (14, 26) als auch von der Abtriebswelle (7) trennt.

11. Kraftfahrzeug nach Anspruch 10,
**dadurch gekennzeichnet,**
**dass** die Steuereinrichtung (12) ausgebildet ist, bei einem Überschreiten eines vorgegebenen Grenzwertes durch einen erfassten Betriebsparameter des Differentials (8, 25) die Kupplungseinrichtung (10) zum Wechsel in den dritten Kupplungszustand anzusteuern.

12. Kraftfahrzeug nach Anspruch 10 oder 11,
**dadurch gekennzeichnet,**
**dass** die Steuereinrichtung (12) ausgebildet ist, ausschließlich bei einem Überschreiten eines weiteren vorgegebenen Grenzwertes durch die Drehzahldifferenz zwischen den Abtriebswellen (6, 7) sowie bei Erfüllung einer vom Betriebszustand des Zusatzmotors (9) abhängigen Verbindungsbedingung die Kupplungseinrichtung (10) zum Betrieb im ersten Kupplungsmodus anzusteuern.

13. Kraftfahrzeug nach einem der vorangehenden Ansprüche,
**dadurch gekennzeichnet,**
**dass** es eine weitere Kupplungseinrichtung (11, 23) umfasst, die in einem ersten Kupplungszustand den Antriebsmotor (4) mit dem angetriebenen Differentialelement (14, 26) koppelt und die in einem zweiten Kupplungszustand den Antriebsmotor (4) von dem angetriebenen Differentialelement (14, 26) trennt.

## Claims

1. Motor vehicle, comprising a drive motor (4) for driving the motor vehicle (1), at least one additional motor (9) and at least one differential (8, 25) for distributing a drive torque generated by the drive motor (4) and guided by a drive shaft (5) to a driven differential element (14, 26) of the differential (8, 25) to two output shafts (6, 7), wherein the differential (8) is designed as a planetary gear with an annulus gear, which is designed in particular as housing of the planetary gear, a sun gear and at least one planetary gear, which is supported by a planetary carrier (15), wherein the motor vehicle (1) comprises a coupling device (10) controllable by a control device (12), which in a first coupling state couples the additional motor (9) directly or indirectly with an output shaft (7), whereby the distribution of the drive torque to the output shafts (6, 7) is dependent on an additional torque exerted by the additional motor (9), and in a second coupling state couples the additional motor (9) directly or indirectly with the driven differential element (14, 26), **characterised in that** the coupling device (10) in the first coupling state couples the additional motor (9) with the planetary carrier (15) of the differential (8).

2. Motor vehicle according to Claim 1 **characterised, in that** the drive motor (4) is an internal combustion engine.

3. Motor vehicle according to claim 1 or 2 **characterised, in that** the additional motor (9) is an electric motor.

4. Motor vehicle according to claim 3, **characterised in that** the motor vehicle (1) comprises an energy storage device with associated charging device, wherein the control device (12) is designed in at least one operating mode to actuate the coupling device (10) for operating in the second coupling state, and to actuate the additional motor (9) and the charging device for charging the energy storage device by recuperation.

5. Motor vehicle according to any one of the preceding claims, **characterised in that** the drive shaft (5) is connected by a bevel gear to the driven differential element (14, 26), wherein a ring gear (16) of the bevel gear is connected to the driven differential element (14, 26), which is designed in particular as housing of the differential (8, 25).

6. Motor vehicle according to claim 5, **characterised in that** the ring gear (16) is connected via a further coupling device (23) controlled by the control device (12) to the driven differential element (14, 26), which in a first coupling state couples the ring gear (16) with the driven differential element (14, 26) and in a second coupling state separates the ring gear (16) from the driven differential element (14, 26).

7. Motor vehicle according to any one of the preceding claims, **characterised in that** in the second coupling state the coupling device (10) couples the additional motor (9) with the annulus gear.

8. Motor vehicle according to any one of the preceding claims, **characterised in that** the coupling device (10) is coupled with the output shaft (7) via a transmission (22) having a predetermined transmission factor.

9. Motor vehicle according to any one of the preceding claims, **characterised in that** the coupling device (10) is coupled with the driven differential element (14, 26) via a transmission having a predetermined transmission factor.

10. Motor vehicle according to any one of the preceding claims, **characterised in that** the coupling device (10) in a third coupling state separates the additional motor (9) both from the driven differential element (14, 26) as well as from the output shaft (7).

11. Motor vehicle according to claim 10, **characterised in that** the control device (12) is designed to actuate the coupling device (10) to change to the third coupling state when a predetermined limit value is exceeded by a detected operating parameter of the differential (8, 25).

12. Motor vehicle according to claim 10 or 11, **characterised in that** the control device (12) is designed to actuate the coupling device (10) for operating in the first coupling mode exclusively when a further predetermined limit value is exceeded by the rotational speed difference between the output shafts (6, 7) and when a connection condition depending on the operating state of the additional motor (9) is satisfied.

13. Motor vehicle according to any one of the preceding claims, **characterised in that** it comprises a further coupling device (11, 12), which in a first coupling state couples the drive motor (4) with the driven differential element (14, 26) and which in a second coupling state separates the drive motor (4) from the driven differential element (14, 26).

## Revendications

1. Véhicule automobile, comprenant un moteur d'entraînement (4) servant à entraîner le véhicule automobile (1), au moins un moteur supplémentaire (9) et au moins un différentiel (8, 25) servant à répartir un couple d'entraînement, généré par le moteur d'entraînement (4) et guidé par un arbre d'entraînement (5) vers un élément de différentiel (14, 26) entraîné du différentiel (8, 25), sur deux arbres de sortie (6, 7), dans lequel le différentiel (8) est réalisé en tant qu'engrenage planétaire avec une couronne à denture intérieure, qui est réalisée en particulier en tant que boîtier de l'engrenage planétaire, une roue solaire et au moins un pignon planétaire, qui est supporté par un porte-satellites (15), dans lequel le véhicule automobile (1) comprend un dispositif de couplage (10), pouvant être commandé par un dispositif de commande (12), qui couple, dans un premier état de couplage, le moteur supplémentaire (9) directement ou indirectement à un arbre de sortie (7), ce qui a pour effet que la répartition du couple d'entraînement sur les arbres de sorties (6, 7) dépend d'un couple de rotation supplémentaire exercé par le moteur supplémentaire (9), et couple, dans un deuxième état de couplage, le moteur supplémentaire (9) directement ou indirectement à l'élément de différentiel (14, 26) entraîné,
**caractérisé en ce**
**que** le dispositif de couplage (10) couple dans le premier état de couplage le moteur supplémentaire (9) au porte-satellites (15) du différentiel (8).

2. Véhicule automobile selon la revendication 1,
**caractérisé en ce**
**que** le moteur d'entraînement (4) est un moteur à combustion interne.

3. Véhicule automobile selon la revendication 1 ou 2,
**caractérisé en ce**
**que** le moteur supplémentaire (9) est un moteur électrique.

4. Véhicule automobile selon la revendication 3,
**caractérisé en ce**
**que** le véhicule automobile (1) comprend un dispositif accumulateur d'énergie avec un dispositif de charge associé, dans lequel le dispositif de commande (12) est réalisé pour piloter dans au moins un mode de fonctionnement le dispositif de couplage (10) aux fins du fonctionnement dans le deuxième état de couplage, et pour piloter le moteur supplémentaire (9) ainsi que le dispositif de charge servant à charger le dispositif accumulateur d'énergie par récupération.

5. Véhicule automobile selon l'une quelconque des revendications précédentes,
**caractérisé en ce**
**que** l'arbre d'entraînement (5) est relié par un engrenage conique à l'élément de différentiel (14, 26) entraîné, dans lequel une couronne de différentiel (16) de l'engrenage conique est reliée à l'élément de différentiel (14,26) entraîné, qui est réalisé en particulier en tant que boîtier du différentiel (8, 25).

6. Véhicule automobile selon la revendication 5,
**caractérisé en ce**
**que** la couronne de différentiel (16) est reliée à l'élément de différentiel (14, 26) entraîné par l'intermédiaire d'un autre dispositif de couplage (23) commandé par le dispositif de commande (12), qui couple, dans un premier état de couplage, la couronne de différentiel (16) à l'élément de différentiel (14, 26) entraîné et sépare, dans un deuxième état de couplage, la couronne de différentiel (16) de l'élément de différentiel (14, 26) entraîné.

7. Véhicule automobile selon l'une quelconque des revendications précédentes,
**caractérisé en ce**
**que** dans le deuxième état de couplage, le dispositif de couplage (10) couple le moteur supplémentaire (9) à la couronne à denture intérieure.

8. Véhicule automobile selon l'une quelconque des revendications précédentes, **caractérisé en ce**
**que** le dispositif de couplage (10) est couplé à l'arbre de sortie (7) par l'intermédiaire d'un engrenage (22) avec un facteur de démultiplication spécifié.

9. Véhicule automobile selon l'une quelconque des revendications précédentes, **caractérisé en ce que** le dispositif de couplage (10) est couplé à l'élément de différentiel (14, 26) entraîné par l'intermédiaire d'un engrenage avec un facteur de démultiplication spécifié.

10. Véhicule automobile selon l'une quelconque des revendications précédentes,
**caractérisé en ce**
**que** le dispositif de couplage (10) sépare, dans un troisième état de couplage, le moteur supplémentaire (9) à la fois de l'élément de différentiel (14, 26) entraîné et de l'arbre de sortie (7).

11. Véhicule automobile selon la revendication 10,
**caractérisé en ce**
**que** le dispositif de commande (12) est réalisé pour piloter lors d'un dépassement d'une valeur limite spécifiée par un paramètre de fonctionnement détecté du différentiel (8, 25), le dispositif de couplage (10) pour passer dans le troisième état de couplage.

12. Véhicule automobile selon la revendication 10 ou 11,
**caractérisé en ce**
**que** le dispositif de commande (12) est réalisé pour piloter, exclusivement lors d'un dépassement d'une autre valeur limite spécifiée par la différence de vitesse de rotation entre les arbres de sortie (6, 7) et lors de la satisfaction d'une condition de liaison dépendant de l'état de fonctionnement du moteur supplémentaire (9), le dispositif de couplage (10) aux fins du fonctionnement dans le premier mode de couplage.

13. Véhicule automobile selon l'une quelconque des revendications précédentes,
**caractérisé en ce**
**qu'**il comprend un autre dispositif de couplage (11, 23), qui couple, dans un premier état de couplage, le moteur d'entraînement (4) à l'élément de différentiel (14, 26) entraîné et qui sépare, dans un deuxième état de couplage, le moteur d'entraînement (4) de l'élément de différentiel (14, 26) entraîné.
